Europäisches Patentamt

European Patent Office

Office européen des brevets

(11) Veröffentlichungsnummer: **0 023 948**

**A1**

(12) # EUROPÄISCHE PATENTANMELDUNG

(21) Anmeldenummer: **80102748.3**

(51) Int. Cl.³: **H 04 B 7/08**

(22) Anmeldetag: **17.05.80**

(30) Priorität: **14.08.79 DE 2932896**

(43) Veröffentlichungstag der Anmeldung:
**18.02.81 Patentblatt 81/7**

(84) Benannte Vertragsstaaten:
**AT FR GB NL**

(71) Anmelder: **Licentia Patent-Verwaltungs-GmbH**
**Theodor-Stern-Kai 1**
**D-6000 Frankfurt/Main 70(DE)**

(72) Erfinder: **Weber, Herbert, Ing. grad.**
**Robert-Bosch-Strasse 1**
**D-7150 Backnang(DE)**

(72) Erfinder: **Braun, Erwin, Ing. grad.**
**Häfnersweg 78**
**D-7150 Backnang(DE)**

(74) Vertreter: **Schickle, Gerhard, Dipl.-Ing.**
**Licentia Patent-Verwaltungs-GmbH Theodor-Stern-Kai**
**1**
**D-6000 Frankfurt/Main 70(DE)**

(54) Schaltungsanordnung für die Empfangsstelle einer Diversity-Übertragungsstrecke.

(57) Die Schaltungsanordnung ist für die Empfangsstelle
einer Diversity-Übertragungsstrecke mit einem Schaltkombinator (SK) zur Durchschaltung des grossen Signals vorgesehen. Die Empfangssignale (e1, e2) werden einer Koppelanordnung (K) zugeführt, an deren Ausgängen die Summe (s)
und die Differenz (d) der Empfangssignale erscheinen. Das
Summen-und Differenzsignal (s,d) werden an den Schaltkombinator (SK) weitergeleitet.

FIG.1

EP 0 023 948 A1

- 2 -

Licentia Patent-Verwaltungs-GmbH          NE2-BK/Th/be
Theodor-Stern-Kai 1                       BK 78/1
D-6000  Frankfurt 70


Schaltungsanordnung für die Empfangsstelle
einer Diversity-Übertragungsstrecke


Die Erfindung betrifft eine Schaltungsanordnung für die Empfangsstelle einer Diversity-Übertragungsstrecke mit einem Schaltkombinator zur Durchschaltung des größeren Signals.

Bei überlagerten Funkfeldern werden durch sogenannte Tieffadings die Übertragungseigenschaften von Richtfunksystemen verschlechtert. Durch diese Fadings können Basisbandschwankungen auftreten, die eine Verkleinerung der Übertragungskapazität zur Folge haben. In der Regel werden solche Funkfelder mit einer Diversity-Einrichtung ausgerüstet. In "Der Fernmelde-Ingenieur, Verlag für Wissenschaft und Leben, Georg Heidecker, Bad Windsheim, 16. Jahrgang, Heft 12, Dezember 1962, S 2-4" ist eine Empfänger-Diversity-Anordnung beschrieben, bei der die Empfänger, von denen je einer an eine der räumlich getrennt voneinander aufgestellten Antennen geschaltet ist, an einem Schaltkombinator angeschlossen sind. Mit Hilfe dieses Schaltkombinators wird jeweils der beste Empfangszweig an den Verbraucher geschaltet. Eine solche Anordnung verbessert zwar das Signal, das durch das Diversity-Verfahren gewonnen wird. Es wird aber immer nur das Empfangssignal einer Antenne ausgewertet; und das bedeutet, daß auch nur die Bündelung und der Gewinn einer einzigen Antenne ausgenutzt werden können.

Um die Bündelung und den Gewinn aller vorhandenen Antennen gleichzeitig ausnutzen zu können, wäre eine Parallelschaltung der in den Empfangszweigen vorhandenen Empfänger sinnvoll. Das bedeutet, daß immer alle Empfänger gemeinsam ihr Signal an den Verbraucher abgeben. Die Parallelschaltung hat aber den Nachteil, daß durch Phasen- und Pegeldifferenzen der Empfangssignale zusätzlich Pegelschwankungen auftreten und hierdurch eine Verschlechterung des Frequenzganges hervorgerufen wird und zusätzliche Geräusche auftreten.

Die Aufgabe der vorliegenden Erfindung besteht nun darin, eine Anordnung anzugeben, die die Vorteile der Schaltkombinatormethode und die der Parallelschaltung auf einfache Weise miteinander verbindet.

Die Aufgabe wird erfindungsgemäß dadurch gelöst, daß die Empfangssignale einer Koppelanordnung zugeführt werden, an deren Ausgängen die Summe und die Differenz der Eingangssignale erscheinen, und daß Summen- und Differenzsignal an den Schaltkombinator weitergeleitet werden.

Eine zweckmäßige Ausführung besteht darin, daß für Normalausbreitung mittels eines Phasenausgleichsgliedes in einem Empfangszweig eine solche Phasendifferenz zwischen den Empfangssignalen fest eingestellt wird, daß an einem Ausgang der Koppelanordnung immer das optimale Summensignal liegt.

Die Erfindung soll jetzt anhand der Figuren näher erläutert werden.

Fig. 1 zeigt eine Schaltung, bei der die erfindungsgemäße Anordnung im Übertragungsfrequenzbereich wirksam ist, und

Fig. 2 zeigt eine Schaltung mit der Anordnung in der Zwischenfrequenzlage.

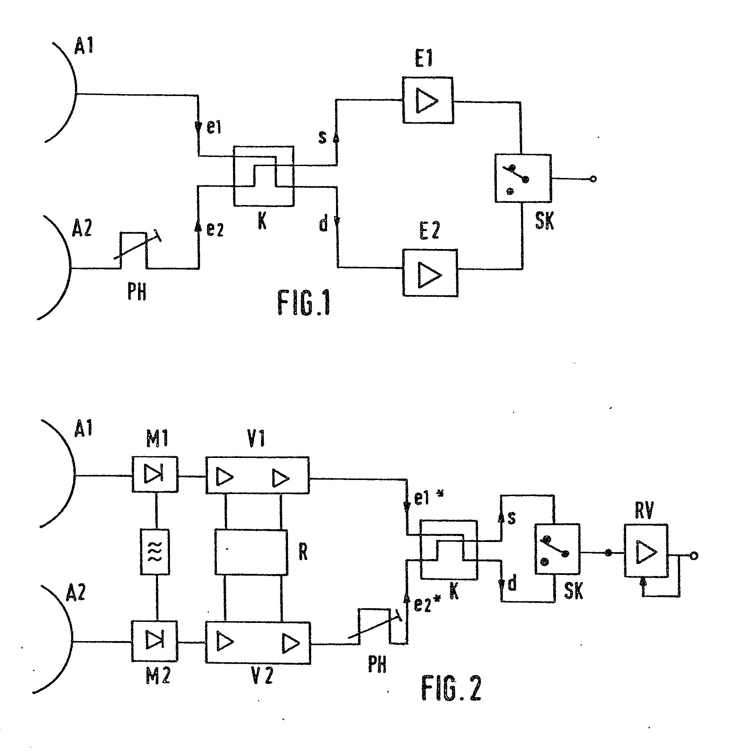

Gemäß der Fig. 1 ist eine Koppelanordnung K (z.B. ein 3-dB-Koppler mit seinen beiden Eingängen auf jeweils eine Antenne A1 und A2 geschaltet. In eine Eingangsleitung der Koppelanordnung ist ein Phasenausgleichsglied PH, beispielsweise ein Leitungsausgleich oder ein Phasenschieber, eingefügt. Dieses Phasenausgleichsglied ist so eingestellt, daß für mittlere Ausbreitungsverhältnisse die beiden über die Antennen A1 und A2 aufgenommenen Empfangssignale e1 und e2 eine solche Phasenlage zueinander besitzen, daß immer an einem Ausgang der Koppelanordnung das optimale Summensignal s und am anderen Ausgang das optimale Differenzsignal d der beiden Empfangssignale e1 und e2 auftritt. Das Summen- und das Differenzsignal an den Ausgängen des 3-dB-Kopplers werden je auf einen Empfänger E1 und E2 gegeben. Die Ausgänge der Empfänger sind an einen Schaltkombinator SK angeschlossen, der jeweils den Empfänger mit dem höchsten Signalpegel an den Verbraucher durchschaltet.

Die in der Fig. 1 dargestellte Anordnung ist im Übertragungsfrequenzbereich wirksam.

Eine entsprechende Anordnung, bei der eine Umsetzung der Empfangssignale in die ZF-Lage erfolgt, zeigt die Fig. 2. Hier werden die Signale der beiden Antennen A1 und A2 einer in jedem Signalzweig vorhandenen Mischstufe M1, M2 und ZF-Verstärker V1, V2 zugeführt und deren Ausgangssignale e1* und e2* an die Koppelanordnung K weitergeleitet. Die Verstärkung der beiden ZF-Verstärker wird mittels einer Verstärkungsregeleinrichtung R so geregelt, daß sie für beide ZF-Verstärker gleich ist, wobei aus dem Empfangssignal mit dem größten Pegel das Regelkriterium für die Verstärkung bei der ZF-Verstärker abgeleitet wird. Dadurch wird ein Übersteuern des Verstärkers, an dem der größte Signalpegel liegt, verhindert.

Zwischen dem ZF-Verstärker V2 und einem Eingang der Koppelanordnung ist ein Phasenausgleichsglied PH eingefügt, zur Einstellung einer solchen Phasenlage zwischen den Eingangssignalen e1* und e2*, bei der für mittlere Ausbreitungsverhältnisse an einem Ausgang der Koppelanordnung immer das optimale Summensignal s und am anderen Ausgang das Differenzsignal d erscheint. Das Summensignal s und das Differenzsignal d werden direkt auf den Schaltkombinator SK gegeben, der dann das Signal mit dem größten Pegel an einen Regelverstärker RV durchschaltet.

Bei einer Empfangsstelle mit mehr als zwei Antennen werden die Empfangssignale über mehrere Koppelanordnungen miteinander verknüpft, aus deren Ausgangssignalen der Schaltkombinator anschließend das optimale Signal heraussucht und durchschaltet.

Die erfindungsgemäße Anordnung hat gegenüber der reinen Schaltkombinatoranordnung den Vorteil, daß die Schalthäufigkeit des Kombinators wesentlich verringert wird, wodurch Störungen, die durch das Schalten auftreten, vermindert werden.

Eine Umschaltung des Kombinators ist bei der vorliegenden Anordnung nämlich nur dann erforderlich, wenn starke Abweichungen von normalen Ausbreitungsverhältnissen auftreten, so daß dann nicht mehr am Summen- sondern am Differenzausgang der Koppelanordnung das optische Signal liegt.

Durch das Parallelschalten der Antennen über die Koppelanordnung, was eine größere Bündelung des Strahlungsdiagramms mit
sich bringt, werden mögliche Umweglängen im Funkfeld reduziert, die die Ursache für die Basisband-Pegelschwankung sind.

-----------------

Licentia Patent-Verwaltungs-GmbH     NE2-BK/Th/be
Theodor-Stern-Kai 1     BK 78/1
D-6000   Frankfurt 70

Patentansprüche

1. Schaltungsanordnung für die Empfangsstelle einer Diversity-Übertragungsstrecke mit einem Schaltkombinator zur Durchschaltung des großen Signals, dadurch gekennzeichnet, daß die Empfangssignale (e1, e2) einer Koppelanordnung (K) zugeführt werden, an deren Ausgängen die Summe und die Differenz der Empfangssignale erscheinen, und daß Summen- (s) und Differenzsignal (d) an den Schaltkombinator (SK) weitergeleitet werden.

2. Schaltungsanordnung nach Anspruch 1, dadurch gekennzeichnet, daß für Normalausbreitung mittels eines Phasenausgleichsgliedes (PH) in einem Empfangszweig eine solche Phasendifferenz zwischen den Empfangssignalen (e1, e2) fest eingestellt wird, daß an einem Ausgang der Koppelanordnung (K) immer das optimale Summensignal liegt.

FIG.1

FIG.2

| Europäisches Patentamt | EUROPÄISCHER RECHERCHENBERICHT | EP 80102748.3 |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>GB - A - 1 235 219</u> (THOMSON)<br>* Fig. 3,5; Seite 2, Zeilen 51-62; Seite 2, Zeilen 99-104 *<br>-- | 1 |
| | <u>US - A - 3 882 393</u> (EPSTEIN)<br>* Fig. 3B; Spalte 4, Zeile 52 - Spalte 5, Zeile 2 *<br>-- | 1,2 |
| | <u>DE - B - 1 237 187</u> (COMPAGNIE <u>GENERALE DE TELEGRAPHIE</u>)<br>* Fig. 1; Spalte 3, Zeilen 43-52; Spalte 4, Zeilen 23-27 *<br>-- | 1,2 |
| | <u>DE - B1 - 2 643 967</u> (SIEMENS)<br>* Fig.; Spalte 3, Zeile 8 - Spalte 4, Zeile 8 *<br>-- | 1,2 |
| A | R.OLDENBOURG VERLAG, München - Wien 1974<br>JÜRGEN DONNEVERT "Richtfunküber-tragungstechnik",<br>Seiten 42 - 48<br>* Seite 45, Zeilen 18-20 * | 1 |

### KLASSIFIKATION DER ANMELDUNG (Int. Cl.3)

H 04 B 7/08

### RECHERCHIERTE SACHGEBIETE (Int. Cl.3)

H 04 B 7/00
G 01 S 3/00
H 01 Q 3/00
H 01 Q 21/00
H 01 Q 25/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

| X | Der vorliegende Recherchenbericht wurde für alle Patentansprüche erstellt. |

| Recherchenort | Abschlußdatum der Recherche | Prüfer |
|---|---|---|
| WIEN | 29-10-1980 | DRÖSCHER |

EPA form 1503.1 06.78